# EUROPEAN PATENT APPLICATION

(11) **EP 1 494 475 A1**
(43) Date of publication of application: **05.01.2005**
(21) Application number: 04015533.5
(22) Date of filing: 01.07.2004
(51) Int. Cl.: H04N 7/01, H04N 5/44

(54) **Video signal converting apparatus and method**

(30) Priority: 03.07.2003 JP 2003190873
(71) Applicant: Pioneer Corporation, Meguro-ku, Tokyo (JP)
(72) Inventor: Ochiai, Kazunori, Ohta-ku Tokyo (JP); Ando, Hiroshi, Ohta-ku Tokyo (JP); Shigeta, Tetsuya, Nakakoma-gun Yamanashi-ken (JP); Nagakubo, Tetsuro, Ohta-ku Tokyo (JP)
(74) Representative: Betten & Resch

(57) **Abstract**

A video signal converting apparatus and method for improving display quality of video signals from both film source and video source. It is discriminated whether the input video signal is an interlaced video signal or not, and it is discriminated whether the input video signal is a video signal from a film source based on a film. If the input video signal is discriminated as interlaced video signals, the input video signal is converted, for outputting, to the progressive video signals by a converting method in accordance with a discrimination result regarding whether the input video signal is a video signal from the film source or not. The converted progressive video signal is converted, for outputting, to a video signal having a high frame rate in accordance with the discrimination result regarding whether the converted progressive video signal is a video signal from the film source or not. If the input video signal is not discriminated as an interlaced video signal, the input video signal is converted to a video signal having a high frame rate in accordance with a discrimination result regarding whether the input video signal is a video signal from the film source or not.

## Description

### BACKGROUND OF THE INVENTION

### 1. Field of the Invention

The present invention relates to a video signal converting apparatus for converting an input video signal so as to be displayed on a display apparatus in high quality.

### 2. Description of the Related Art

Among video signals in a standard television system such as the NTSC system, a video signal from a film source based on a movie film is used occasionally. A movie film includes 24 frames per second while a video signal in a standard television system include 30 frames per second and is a video signal of interlaced scanning having frames each including two fields. Since the numbers of frames per second differ, each frame of a movie film is telecine-converted with a 2-3 pull-down process so that a video signal in the standard television system can be generally obtained.

With the 2-3 pull down process, first and second fields of a first frame of a video signal are created from a first frame of a movie film. First and second fields of a second frame of the video signal and a first field of a third frame of the video signal are created from a second frame of the movie film. A second field of the third frame of the video signal and a first field of a fourth frame of the video signal are created from the third frame of the movie film. The same conversion is performed on the subsequent frames so that a video signal can be created from consecutive frames of the movie film, in such a manner that a video signal is sequentially produced for two fields, three fields, two fields and three fields.

Thus, two frames of the movie film correspond to five frames of a video signal in the standard television system and are converted to a video signal in which two fields of the video signal and three fields of the video signal are alternately repeated with respect to frames of the movie film.

Incidentally, when a picture with interlaced-scanned video signals resulting from telecine conversion is displayed on a display apparatus such as a PDP, the quality of the picture become poorer than that of the original movie film. This is because, for example, the third frame among consecutive frames of the video signal is a combination of images of the second frame and third frame of the movie film.

On the other hand, even if the video signal is not a signal from a film source but a signal from the so-called video source, if the video signal is resulted from interlaced scanning or has a low frame rate, flicker may easily occur. Thus, better image quality cannot be obtained, which is another problem.

Accordingly, problems to be solved by the invention include the-above described problems, for example. It is an object of the invention to provide a video signal converting apparatus and to provide a method which can improve display quality for video signals from both of a film source and a video source.

### SUMMARY OF THE INVENTION

According to an aspect of the invention, there is provided a video signal converting apparatus for converting an input video signal to a progressive video signal having a high frame rate, the apparatus including an interlace discriminating means for discriminating whether the input video signal is an interlaced video signal or not, a film source discriminating means for discriminating whether the input video signal is a video signal from a film source based on a film, an interlace/progressive converting means for converting, for outputting, the input video signal to the progressive video signal by a converting method in accordance with a discrimination result by the film source discriminating means if the interlace discriminating means discriminates that the input video signal is an interlaced video signal and for outputting the input video signal as it is if the interlace discriminating means discriminates that the input video signal is not an interlaced video signal, and a frame rate converting means for converting an output video signal from the interlace/progressive converting means to a video signal having a high frame rate in accordance with the discrimination result by the film source discriminating means.

According to another aspect of the invention, there is provided a video signal converting method for converting an input video signal to a progressive video signal having a high frame rate, the method including the steps of discriminating whether the input video signal is an interlaced video signal or not, discriminating whether the input video signal is a video signal from a film source based on a film, if the input video signal is discriminated as an interlaced video signal, converting, for outputting, the input video signal to the progressive video signal by a converting method in accordance with a discrimination result regarding whether the input video signal is a video signal of the film source or not and converting the converted progressive video signal to a video signal having a high frame rate in accordance with the discrimination result regarding whether the converted progressive video signal is the video signal from the film source or not, and if the input video signal is not discriminated as an interlaced video signal, converting the input video signal to a video signal having a high frame rate in accordance with the discrimination result regarding whether the input video signal is the video signal from the film source or not.

### BRIEF DESCRIPTION OF THE DRAWINGS

Fig. 1 is a block diagram showing a configuration of a video signal converting apparatus according to the invention;
Fig. 2 is a diagram showing a flow of processing of the video signal converting apparatus compliant with a signal format of input video signals;
Fig. 3 is a diagram showing an operation state in each synchronized timing of components of the video signal converting apparatus in Fig. 1 when the input video signal is a video signal in the NTSC system;
Fig. 4 is a diagram showing an operation state for each synchronized timing of components of the video signal converting apparatus in Fig. 1 when the input video signal is a video signal in the PAL system; and
Fig. 5 is a diagram showing an operation state in each synchronized timing of components of the video signal converting apparatus in Fig. 1 when equalizing the frame rate of the video signal in Fig. 4.

### DESCRIPTION OF THE PREFERRED EMBODIMENT

An embodiment of the invention will be described below in detail with reference to drawings.

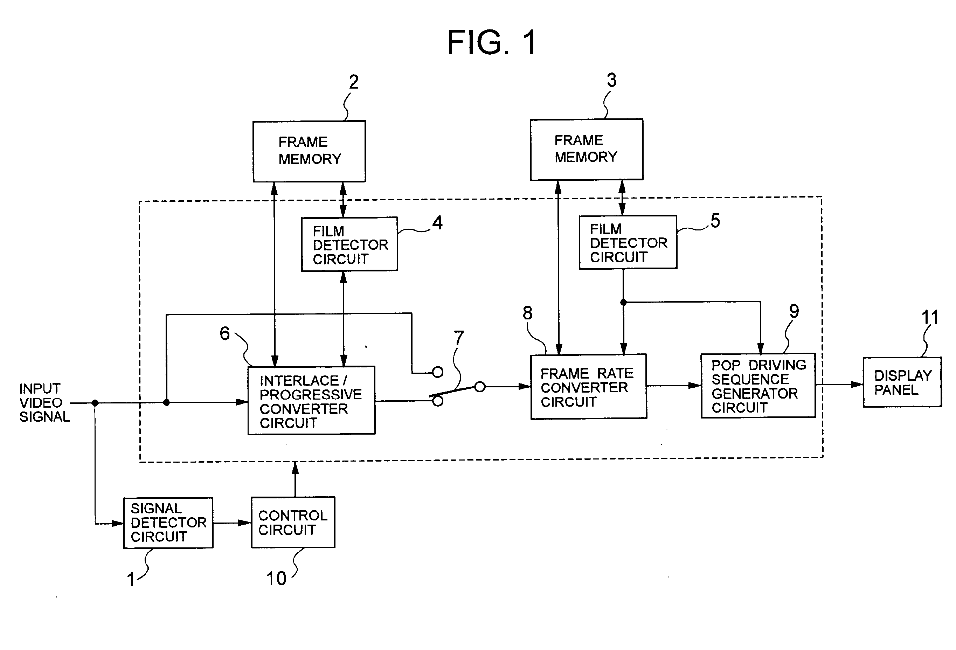

Fig. 1 shows a video signal converting apparatus of the invention. The video signal converting apparatus includes a signal detector circuit 1, frame memories 2 and 3, film detector circuits 4 and 5, an interlace/progressive converter circuit 6, a select switch 7, a frame rate converter circuit 8, a PDP-driving sequence generator circuit 9 and a control circuit 10.

The signal detector circuit 1 detects a synchronizing signal of the input video signal and discriminates a signal format of the video signal. The signals processable by the converting apparatus according to this embodiment include a video signal in the NTSC system, a video signal in the PAL system, a 525 scan line progressive video signal, a 625 scan line progressive video signal, a 750 scan line progressive video signal at the vertical synchronizing frequency fv of 50/60 Hz, a 1125 scan line interlaced video signal at the vertical synchronizing frequency fv of 50/60 Hz and a 1125 scan line progressive video signal at the vertical synchronizing frequency fv of 24 Hz. However, the invention is not limited thereto. Since specific detecting methods for these video signals are known, the description thereof will be omitted here.

Information of a signal format discriminated by the signal detector circuit 1 is supplied to the control circuit 10. The control circuit 10 controls, based on the information of the signal format, the film detector circuits 4 and 5, the interlace/progressive converter circuit 6, the select switch 7, the frame rate converter circuit 8 and the PDP driving sequence generator circuit 9 (in the part surrounded by the dashed line in Fig. 1) in the converting apparatus.

When the input video signal is an interlaced video signal, the interlace/progressive converter circuit 6 converts the input video signal to a progressive video signal in accordance with an instruction from the control circuit 10. For the conversion, the frame memory 2 and the film detector circuit 4 are used. When the input video signal is an interlaced video signal, the interlace/progressive converter circuit 6 writes the input video signal in frames in the frame memory 2. The film detector circuit 4 detects whether or not the video signal having been written in the frame memory 2 is a video signal resulting from the so-called telecine-conversion based on a film. When a source of video signals is a film, the source is denoted as a film source. On the other hand, when a source of video signals is not a film, the source is denoted as a video source. The signal indicating the detection result by the film detector circuit 4 is supplied to the interlace/progressive converter circuit 6. In accordance with the detection result by the film detector circuit 4, the interlace/progressive converter circuit 6 performs conversion to a progressive video signal.

The select switch 7 performs a switching operation in accordance with an instruction from the control circuit 10. When the input video signals is a progressive video signal, the select switch 7 relays the input video signal to the frame rate converter circuit 8 while bypassing the interlace/progressive converter circuit 6. When input video signal is an interlaced video signal, the select switch 7 relays the video signal outputted from the interlace/progressive converter circuit 6 to the frame rate converter circuit 8.

The frame rate converter circuit 8 converts a frame rate, that is a vertical synchronizing frequency, of the video signal supplied through the select switch 7 in accordance with an instruction from the control circuit 10. For the conversion, the frame memory 3 and the film detector circuit 5 are used. The frame rate converter circuit 8 writes the video signal in frames in the frame memory 3. The film detector circuit 5 is similar to the film detector circuit 4 and detects whether or not the video signal having been written in the frame memory 3 is the so-called telecine-converted video signal based on a film. A signal indicating a detection result by the film detector circuit 5 is supplied to the frame rate converter circuit 8 and the PDP driving sequence generator circuit 9. The frame rate converter circuit 8 performs frame-rate conversion in accordance with the detection result by the film detector circuit 5. The PDP driving sequence generator circuit 9 is connected to the output of the frame rate converter circuit 8. The output video signal of the frame rate converter circuit 8 is supplied to the PDP driving sequence generator circuit 9.

The PDP driving sequence generator 9 drives a PDP display panel 11 in accordance with the output video signal of the frame rate converter circuit 8 and the signal indicating a detection result by the film detector circuit 5.

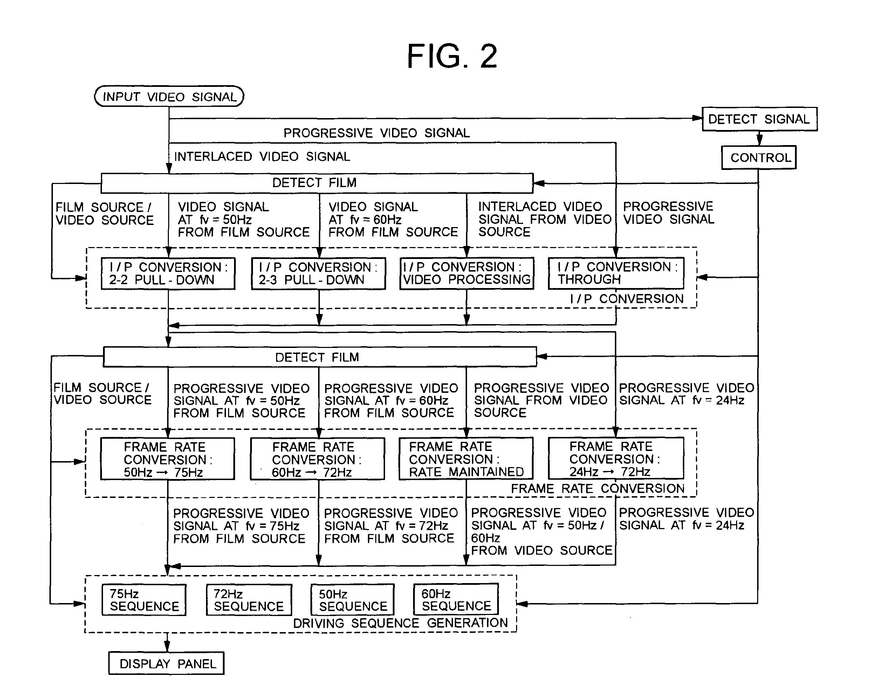

Next, an operation of the video signal converting apparatus having this construction will be described. Here, it is assumed that the apparatus receives one of the video signal in the NTSC system, the video signal in the PAL system, the 525 scan line progressive video signal, the 625 scan line progressive video signal, the 750 scan line progressive video signal at the vertical synchronizing frequency fv of 50/60 Hz, the 1125 scan line interlaced video signal at the vertical synchronizing frequency fv of 50/60 Hz and 1125 scan line progressive video signal at the vertical synchronizing frequency fv of 24 Hz. Fig. 2 shows a flow of processing of the video signal converting apparatus for input video signals in these signal formats.

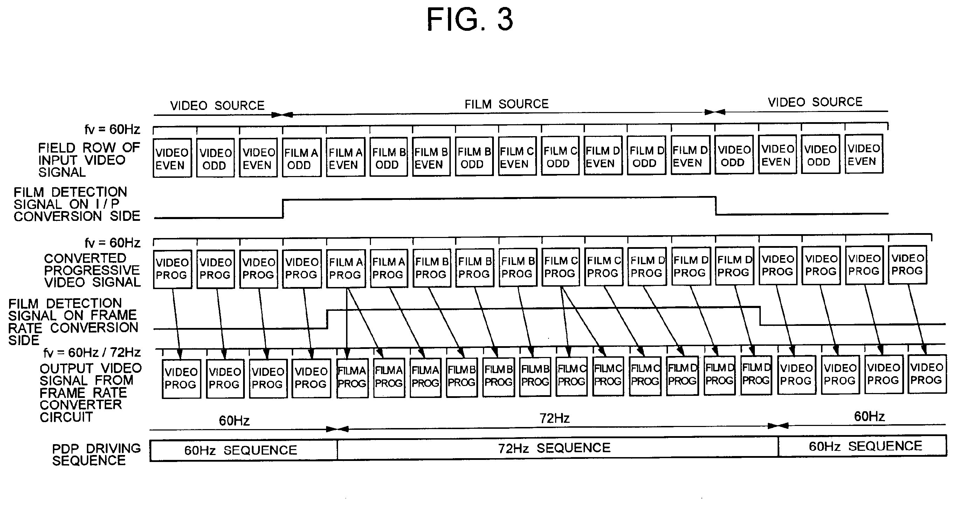

As shown in Fig. 3, the video signal in the NTSC system is a signal in which a first field "Video odd" and a second field "Video even" are repeated at the vertical synchronizing frequency fv of 60 Hz. Thus, the video signal in the NTSC system is detected by the signal detector circuit 1 as an interlaced video signal. Then, select switch 7 is caused to relay an output signal of the interlace/progressive converter circuit 6 to the frame rate converter circuit 8. For the video signal in the NTSC system from a video source, a film detection signal by the film detector circuit 4 is a low-level signal indicating zero (0). The interlace/progressive converter circuit 6 reads one frame's worth of the video signal twice at the vertical synchronizing frequency fv of 60 Hz every time when video signals for two fields (the first field Video odd and the second field Video even), that is, for one frame are written in the frame memory 2. Thus, the video signal can be converted to a 525 scan line progressive video signal Video prog. The progressive video signal is supplied to the frame rate converter circuit 8 through the select switch 7. The frame rate converter circuit 8 writes the supplied progressive video signal in the frame memory 3. Since the film detection signal by the film detection circuit 5 is the low-level signal indicating zero (0), the frame rate converter circuit 8 reads the video signal Video prog for one frame at the vertical synchronizing frequency fv of 60 Hz of the progressive video signal having been written in the frame memory 3. In other words, the video signal Video prog are output, which are the same as the written video signals Video prog. The video signal is supplied to the PDP driving sequence generator circuit 9. The PDP driving sequence generator circuit 9 drives the PDP display panel 11 at 60 Hz sequence in accordance with the video signal at the vertical synchronizing frequency fv of 60 Hz.

As shown in Fig. 3, the video signal in the NTSC system from a film source is a video signal with 2-3 pull down like fields Film A odd, Film A even, Film B odd, Film B even and Film B odd and so on. Film A odd refers to a first field of Frame A, and Film A even refers to a second field of Frame A. A film detection signal by the film detector circuit 4 is a high-level signal indicating one (1). Since the vertical synchronizing frequency fv of the video signal in the NTSC system is 60 Hz, the interlace/progressive converter circuit 6 reads video signal Film A prog for one frame twice at the vertical synchronizing frequency fv of 60 Hz every time when the video signal for two fields (including the first field Film A odd and the second field Film A even) are written in the frame memory 2. Furthermore, the interlace/progressive converter circuit 6 reads the video signal Film B prog for one frame three times at the vertical synchronizing frequency fv of 60 Hz every time when the video signal for two fields (including the first field Film B odd and the second field Film B even) is written in the frame memory 2. The last field Film B odd of serial five fields of the input video signal is ignored. By repeating this, the input video signal can be converted to a 525 scan line progressive video signal. The progressive video signal is supplied to the frame rate converter circuit 8 through the select switch 7. The frame rate converter circuit 8 writes the supplied progressive video signal in the frame memory 3. Since the output signal from the film detection circuit 5 is a high-level signal indicating one (1), the frame rate converter circuit 8 reads the video signal for one frame at the vertical synchronizing frequency fv of 72 Hz of the progressive video signal having been written in the frame memory 3. The frame rate converter circuit 8 supplies the video signals to the PDP driving sequence generator circuit 9. For the reading of the video signal for one frame, the same frame is read twice for every five frames. As shown in Fig. 3, frames Film A prog, frame Film C prog and so on are read twice. Thus, three same frames of the video signal at the vertical synchronizing frequency fv of 72 Hz resulting from the frame-rate conversion are provided in series. The PDP driving sequence generator circuit 9 drives the PDP display panel 11 at 72 Hz sequence in accordance with the video signal at the vertical synchronizing frequency fv of 72 Hz.

A case that input video signal is a 1125 scan line interlace video signal at the vertical synchronizing frequency fv of 60 Hz is only different in number of scan lines from the case of the video signal in the NTSC system. Therefore, the operation of the video signal converting apparatus is the same as the operation for the video signal in the NTSC system for both video source and film source.

When the input video signal is a 525 scan line progressive video signal at the vertical synchronizing frequency fv of 60 Hz, the signal detector circuit 1 detects the input video signal as a progressive video signal. Thus, the select switch 7 is caused to relay the input video signal directly to the frame rate converter circuit 8. A frame rate conversion operation thereof is the same as the operation after the generation of a progressive video signal from the video signal in the NTSC system.

When the input video signal is a 750 scan line progressive video signals at the vertical synchronizing frequency fv of 60 Hz, the frame rate conversion operation is the same as that of the 525 scan line progressive video signal. The numbers of scan lines only are different between the 750 scan line progressive video signal and the 525 scan line progressive video signal.

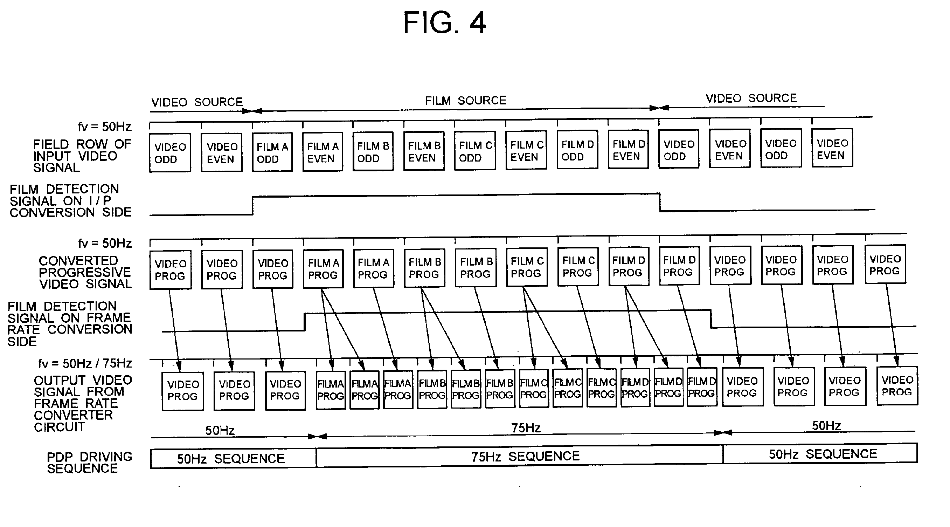

As shown in Fig. 4, the video signal in the PAL system is a signal in which a first field Video odd and a second field Video even are repeated at the vertical synchronizing frequency fv of 50 Hz. Thus, the video signal in the PAL system is detected by the signal detector circuit 1 as an interlaced video signal. Then, the select switch 7 is caused to relay the output signal of the interlace/progressive converter circuit 6 to the frame rate converter circuit 8. For the video signal in the PAL system from a video source, the output signal of the film detector circuit 4 is a low-level signal indicating zero (0). The interlace/progressive converter circuit 6 reads the video signal for one frame twice at the vertical synchronizing frequency fv of 50 Hz every time when the video signals for two fields (the first field Video odd and the second field Video even), that is, for one frame is written in the frame memory 2. Thus, the video signal can be converted to a 625 scan line progressive video signal Video prog. The progressive video signal is supplied to the frame rate converter circuit 8 through the select switch 7. The frame rate converter circuit 8 writes the supplied progressive video signal in the frame memory 3. Since the output signal of the film detection circuit 5 is a low-level signal indicating zero (0), the frame rate converter circuit 8 reads the video signal Video prog for one frame at the vertical synchronizing frequency fv of 50 Hz of the progressive video signal having been written in the frame memory 3. In other words, the video signal Video prog is outputted, which is the same as the written video signal Video prog. The video signal is supplied to the PDP driving sequence generator circuit 9. The PDP driving sequence generator circuit 9 drives the PDP display panel 11 at 50 Hz sequence in accordance with the video signal at the vertical synchronizing frequency fv of 50 Hz.

As shown in Fig. 4, the video signal in the PAL system from a film source is a video signal with 2-2 pull down like fields Film A odd, Film A even, Film B odd, Film B even, Film C odd, Film C even and so on. Film A odd refers to a first field of Frame A, and Film A even refers to a second field of Frame A. The output signal of the film detector circuit 4 is a high-level signal indicating one (1). Since the vertical synchronizing frequency fv of the video signal in the PAL system is 50 Hz, the interlace/progressive converter circuit 6 reads the video signal Film A prog for one frame twice at the vertical synchronizing frequency fv of 50 Hz every time when the video signal for two fields (the first field Film A odd and the second field Film A even) is written in the frame memory 2. By repeating this operation on subsequent fields such as Film B odd, Film B even, Film C odd and Film C even, the input video signal can be converted to 625 scan line progressive video signals. The progressive video signal is supplied to the frame rate converter circuit 8 through the select switch 7. The frame rate converter circuit 8 writes the supplied progressive video signal in the frame memory 3. Since the output signal of the film detection circuit 5 is a high-level signal indicating one (1), the frame rate converter circuit 8 read the video signal for one frame at the vertical synchronizing frequency fv of 75 Hz of the progressive video signal having been written in the frame memory 3. The frame rate converter circuit 8 supplies the video signal to the PDP driving sequence generator circuit 9. For the reading of the video signal for one frame, one frame is read twice for every two frames. As shown in Fig. 4, frames Film A prog, Film B prog and so on are read twice every other frame. Thus, three same frames of the video signal at the vertical synchronizing frequency fv of 72 Hz resulting from frame-rate conversion are provided in series. The PDP driving sequence generator circuit 9 drives the PDP display panel 11 at 72 Hz sequence in accordance with the video signal at the vertical synchronizing frequency fv of 72 Hz.

A case that input video signal is a 1125 scan line interlaced video signal at the vertical synchronizing frequency fv of 50 Hz is only different from the case of the video signal in the PAL system in number of scan lines. Therefore, the operation of the video signal converter is the same as the operation for the video signal in the PAL system for both video source and film source.

When the input video signal is a 625 scan line progressive video signal at the vertical synchronizing frequency fv of 50 Hz, the signal detector circuit 1 detects the input video signal as a progressive video signal. Thus, the select switch 7 is caused to relay the input video signal directly to the frame rate converter circuit 8. A frame rate conversion operation thereof is the same as the operation after the generation of the progressive video signal from the video signal in the PAL system.

When input video signal is a 750 scan line progressive video signals at the vertical synchronizing frequency fv of 50 Hz, the frame rate conversion operation is the same as that of the 625 scan line progressive video signal. The number of scan lines only are different between the 750 scan line progressive video signal and the 625 scan line progressive video signal.

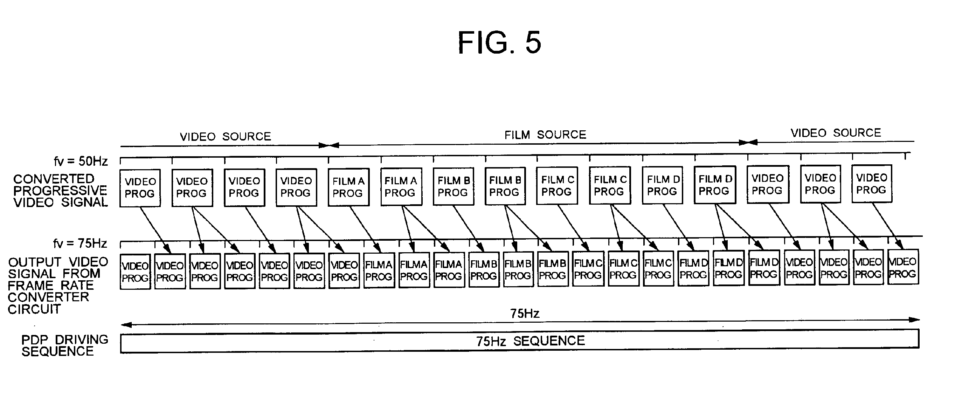

When the input video signal has the vertical synchronizing frequency fv of 50 Hz, the vertical synchronizing frequencies fv after frame-rate conversion differ from each other like 50 Hz and 75 Hz between a video source and a film source. However, the input video signal from both of the video source and the film source can have a frame rate at the vertical synchronizing frequency fv of 75 Hz. In other words, as shown in Fig. 5, for the progressive video signal Video prog from a video source at the vertical synchronizing frequency fv of 50 Hz, the frame rate converter circuit 8 reads the video signal for one frame at the vertical synchronizing frequency fv of 75 Hz of the progressive video signal having been written in the frame memory 3 and reads the same frame twice for every two frames. The progressive video signal from a film source at the vertical synchronizing frequency fv of 50 Hz is converted to a video signal having a frame rate at the vertical synchronizing frequency fv of 75 Hz as described above. As a result, the PDP driving sequence generator circuit 9 can always drive the PDP display panel 11 at the 75 Hz sequence. Thus, by converting the input video signal from both video source and film source to a progressive video signal at a high frame rate, flicker in displayed pictures can be reduced regardless of the signal source.

When the input video signal is a 1125 scan line progressive video signal at the vertical synchronizing frequency fv of 24 Hz, the signal detector circuit 1 detects the input video signal as a progressive video signal. Thus, the select switch 7 is caused to relay the input video signal directly to the frame rate converter circuit 8. The frame rate converter circuit 8 reads the video signal for one frame at the vertical synchronizing frequency fv of 72 Hz of the progressive video signal having been written in the frame memory 3 and reads the video signal of the same frame three times. The PDP driving sequence generator circuit 9 drives the PDP display panel 11 at 72 Hz sequence in accordance with a video signal at the vertical synchronizing frequency fv of 72 Hz.

In this embodiment, the film source discriminating unit for discriminating the input video signal as a video signal resulting from telecine conversion based on a film includes the two film detector circuits 4 and 5. However, the film detector circuit 5 may be removed, and the film detector circuit 4 may be only provided.

As described above, according to the invention, an input video signals is converted to a progressive video signal having a high frame rate compliant with a signal format thereof so that flicker in displayed pictures can be reduced. Therefore, display quality for video signals from both film source and video source can be improved.

In summary, an embodiment of the invention can be described as follows:
A video signal converting apparatus and method for improving display quality of video signals from both film source and video source. It is discriminated whether the input video signal is an interlaced video signal or not, and it is discriminated whether the input video signal is a video signal from a film source based on a film. If the input video signal is discriminated as interlaced video signals, the input video signal is converted, for outputting, to the progressive video signals by a converting method in accordance with a discrimination result regarding whether the input video signal is a video signal from the film source or not. The converted progressive video signal is converted, for outputting, to a video signal having a high frame rate in accordance with the discrimination result regarding whether the converted progressive video signal is a video signal from the film source or not. If the input video signal is not discriminated as an interlaced video signal, the input video signal is converted to a video signal having a high frame rate in accordance with a discrimination result regarding whether the input video signal is a video signal from the film source or not.

## Claims

1. A video signal converting apparatus for converting an input video signal to a progressive video signal having a high frame rate, the apparatus comprising:
an interlace discriminating means for discriminating whether the input video signal is an interlaced video signal or not;
a film source discriminating means for discriminating whether the input video signal is a video signal from a film source based on a film;
an interlace/progressive converting means for converting, for outputting, the input video signal to the progressive video signal by a converting method in accordance with a discrimination result by the film source discriminating means if the interlace discriminating means discriminates that the input video signal is an interlaced video signal, and for outputting the input video signal as they are if the interlace discriminating means discriminates that the input video signal is not an interlaced video signal; and
a frame rate converting means for converting output video signals from the interlace/progressive converting means to a video signal having a high frame rate in accordance with a discrimination result by the film source discriminating means.

2. A video signal converting apparatus according to Claim 1, comprising:
the interlace discriminating means including a synchronizing signal detecting means for detecting a vertical synchronizing signal of the input video signal; and
the interlace/progressive converting means outputting the progressive video signals in synchronization with the vertical synchronizing signal of the input video signal.

3. A video signal converting apparatus according to Claim 2,
wherein, when the vertical synchronizing frequency of the input video signal is 50 Hz, the interlace/progressive converting means repeats the generation of the progressive video signals for one frame including two fields of the input video signal and the output of the progressive video signals continuously twice, and, when the vertical synchronizing frequency of the input video signal is 60 Hz, the interlace/progressive converting means repeats the generation of the progressive video signal for one frame including the first two fields of five fields of the input video signal and the output of the progressive video signal continuously twice and the generation of the progressive video signal for one frame including the next two fields, the output of the progressive video signal continuously twice and the ignorance of the remaining one field.

4. A video signal converting apparatus according to any of Claims 1 to 3, wherein the frame rate converting means converts the progressive video signal resulting from the input video signal at the vertical synchronizing frequency of 50 Hz when the discrimination result by the film source discriminating means indicates a film source to a video signal having the frame rate of 75 Hz, and the frame rate converting means converts the progressive video signal resulting from the input video signal at the vertical synchronizing frequency of 60 Hz to a video signal having the frame rate of 72 Hz when the discrimination result by the film source discriminating means indicates a film source.

5. A video signal converting apparatus according to any of Claims 1 to 4, wherein the frame rate converting means converts the progressive video signal resulting from the input video signal at the vertical synchronizing frequency of 50 Hz to a video signal having the frame rate of 75 Hz when the discrimination result by the film source discriminating means indicates a video source, and the frame rate converting means converts the progressive video signal resulting from the input video signal at the vertical synchronizing frequency of 24 Hz to a video signal having the frame rate of 72 Hz when the discrimination result by the film source discriminating means indicates a video source.

6. A video signal converting method for converting an input video signal to a progressive video signal having a high frame rate, the method comprising the steps of:
discriminating whether the input video signal is an interlaced video signal or not;
discriminating whether the input video signal is a video signal from a film source based on a film;
if the input video signal is discriminated as an interlaced video signal, converting, for outputting, the input video signal to the progressive video signal by a converting method in accordance with a discrimination result regarding whether the input video signal is a video signal of the film source or not and converting the converted progressive video signal to a video signal having a high frame rate in accordance with the discrimination result regarding whether the converted progressive video signal is the video signal from the film source or not; and
if the input video signal is not discriminated as an interlaced video signal, converting the input video signal to a video signal having a high frame rate in accordance with a discrimination result regarding whether the input video signal is a video signal from the film source or not.
